# EUROPEAN PATENT APPLICATION

(11) **EP 4 550 560 A1**
(43) Date of publication of application: **07.05.2025**
(21) Application number: 24208994.4
(22) Date of filing: 25.10.2024
(51) Int. Cl.: H01M 50/502, H01M 50/516, H01M 50/503, H01M 50/547, H01M 50/553, H01M 10/04, H01M 50/211, H01M 50/50, H01M 50/548, H01M 50/55

(54) **BATTERY MODULE AND MANUFACTURING METHOD THEREOF, BATTERY PACK, AND ELECTRIC DEVICE**

(30) Priority: 27.10.2023 CN 202311411374
(71) Applicant: Xiamen Ampack Technology Limited, Xiamen City, Fujian Province, 361000 (CN)
(72) Inventor: LI, Ji, Xiamen City, 361000 (CN); WU, Mingjie, Xiamen City, 361000 (CN)
(74) Representative: Icosa

(57) **Abstract**

A battery module (100) includes a cell assembly (10), a first component (20), and a first conductive member (30). The cell assembly (10) includes a plurality of cells, the cell includes a cell shell (111) and an electrode terminal (112), and each electrode terminal (112) includes a welding portion (112a). The plurality of cells include a first cell (11a) and a second cell (11b). The first component (20) and the cell shell (111) are arranged along a first direction (X). The first conductive member (30) is disposed on a side of the first component (20), the side of the first component (20) being a side oriented away from the cell shell (111). The first conductive member (30) includes a first connection portion (31) and a second connection portion (32). The first connection portion (31) is welded to the electrode terminal (112) of the first cell (11a). Along the first direction (X), a projection of the welding portion (112a) of at least one second cell (11b) overlaps a projection of the first conductive member (30).

## Description

### TECHNICAL FIELD

This application relates to the field of energy storage technologies, and in particular, to a battery module and a manufacturing method thereof, a battery pack, and an electric device.

### BACKGROUND

At present, battery modules are widely used in fields such as drones, electric vehicles, and intelligent energy storage devices. The existing battery module has the problem of low space utilization, which affects the energy density of the battery module.

### SUMMARY

In view of this, it is necessary to provide a battery module and a manufacturing method thereof, a battery pack, and an electric device, so as to improve the space utilization and energy density.

Embodiments of this application provide a battery module, including a cell assembly, a first component, and a first conductive member. The cell assembly includes a plurality of cells, the cell includes a cell shell and an electrode terminal, and each electrode terminal includes a welding portion. The plurality of cells include a first cell and a second cell. The first component and the cell shell are arranged along a first direction. The first conductive member is disposed on a side of the first component, the side of the first component being a side oriented away from the cell shell. The first conductive member includes a first connection portion and a second connection portion. The first connection portion is welded to the electrode terminal of the first cell. The second connection portion is configured to be connected to an external device. Along the first direction, a projection of the welding portion of at least one second cell overlaps a projection of the first conductive member, reducing the occupied space, which helps to improve the space utilization, thereby increasing the energy density of the battery module.

Optionally, in some embodiments of this application, the cell assembly includes a plurality of cells stacked along a second direction, and the first cell is an outermost cell of the cell assembly in the second direction, facilitating connection to the first connection portion.

Optionally, in some embodiments of this application, the first connection portion is welded to the electrode terminal of the first cell to form a welding mark, and the welding mark is located on a side of the welding portion of the first cell towards the first component.

Optionally, in some embodiments of this application, the first conductive member is configured to transmit power and/or electrical signal of the cell assembly.

Optionally, in some embodiments of this application, the first conductive member includes a third connection portion, and the third connection portion connects the first connection portion and the second connection portion. Along the first direction, the second connection portion and the first component are spaced apart from each other, which helps to reduce the short circuit risk caused by the contact between the second connection portion and another welding portion.

Optionally, in some embodiments of this application, each cell shell includes a main body portion and a first sealing portion, and the electrode terminal extends out of the first sealing portion from the main body portion. Each cell includes an electrode assembly, and the electrode assembly is disposed at the main body portion. The electrode terminal welded to first connection portion includes an extension portion located outside the cell shell, the extension portion is away from the second cell, and the extension portion is inclined with respect to the first sealing portion of the first cell, reducing the short circuit risk.

Optionally, in some embodiments of this application, the first conductive member includes a copper bar.

Optionally, in some embodiments of this application, the first component includes a plurality of openings. The welding portionsof two adjacent cells pass through one of the openings, and the welding portionsof the two adjacent cellare welded on a side of the first component to form a connection region, the side of the first component being a side oriented away from the cell shell. Along the first direction, a projection of the second connection portion overlaps a projection of the connection region closest to the first cell.

Optionally, in some embodiments of this application, the battery module further includes an insulating member, the insulating member is disposed between the first component and the second connection portion, and the insulating member covers at least a part of the connection region. Along the first direction, the projection of the second connection portion is located within a projection of the insulating member, which can further reduce the short circuit risk caused by the contact between the second connection portion and welding portions of other cells.

Optionally, in some embodiments of this application, the first component includes a first circuit board.

Optionally, in some embodiments of this application, the electrode terminal includes a bending portion. In a direction opposite to the second direction, the bending portion is configured to bend away from the first component, facilitating the deformation of the electrode terminal of the first cell.

Optionally, in some embodiments of this application, along the second direction, the first component includes a first side edge and a second side edge, the first side edge is provided with a first notch and a second notch, and the first notch and the second notch are arranged along the third direction. Along the second direction, the width of the first notch is smaller than the width of the second notch, increasing the distance between the first notch and the adjacent opening. This facilitates the arrangement of the first conductive member, can increase the distance between the welding portion of the first cell and the welding portion of the adjacent cell, and helps to reduce the short circuit risk.

Optionally, in some embodiments of this application, the battery module includes two first conductive members and two first cells, where one first conductive member is connected to the electrode terminal of the first cell, and the first connection portion of the other first conductive member is connected to the electrode terminal of the other first cell.

Optionally, in some embodiments of this application, the first component includes a plurality of conductive sheets. The electrode terminals of adjacent cells pass through the openings, the two welding portions are connected to the conductive sheets, and the two welding portions and the conductive sheets are stacked to form a connection region.

Optionally, in some embodiments of this application, the first component includes a plurality of conductive sheets. The electrode terminals of adjacent cells pass through the openings. Of the two welding portions, one welding portion is connected to the conductive sheet to form a connection region, and the other welding portion is connected to the conductive sheet to form a connection region. The two welding portions are spaced apart from each other along the first direction.

Optionally, in some embodiments of this application, the battery module includes two first conductive members and two first cells, with the first cells being the two outermost cells of the cell assembly along the second direction.

Optionally, in some embodiments of this application, the cell includes a pouch cell.

Optionally, in some embodiments of this application, the first component includes an insulating bracket.

Optionally, in some embodiments of this application, the first connection portion, the second connection portion, and the third connection portion are integrally formed.

Optionally, in some embodiments of this application, one of the two first conductive members serves as the positive terminal of the cell assembly, and the other serves as the negative terminal of the cell assembly.

An embodiment of this application provides a method of manufacturing the battery module in any one of the foregoing embodiments, the method including the following steps: bending the welding portion of the first cell in a direction away from the first component, and arranging the welding portion of the first cell and the first connection portion along the first direction; welding the first connection portion to the welding portion; and bending the welding portion towards the first component, arranging the first connection portion and the welding portion along the first direction, and connecting the first connection portion to the first component, which can simplify the laser welding process and improve the production efficiency.

An embodiment of this application provides a battery pack of the battery module in any one of the above embodiments, including a housing, where the battery module is disposed in the housing.

An embodiment of this application provides an electric device, including the battery pack according to any one of the foregoing embodiments.

According to the above battery module, battery pack, and electric device, the second connection portion does not extend beyond the first component, reducing the occupied space, which helps to improve the space utilization, thereby increasing the energy density of the battery module.

### BRIEF DESCRIPTION OF DRAWINGS

FIG. 1 is a schematic diagram of a partial structure of a battery pack according to some embodiments.
FIG. 2 is a schematic structural diagram of a cell according to some embodiments.
FIG. 3 is a schematic structural diagram of the cell in another state according to some embodiments.
FIG. 4 is a schematic structural diagram of a cell assembly according to some embodiments.
FIG. 5 is a schematic structural diagram of a battery module according to some embodiments.
FIG. 6 is a schematic structural diagram of the battery module at another view angle in FIG. 5.
FIG. 7 is a schematic enlarged view of a partial structure of the battery module in FIG. 6.
FIG. 8 is a schematic structural diagram of the battery module in another state according to some embodiments.
FIG. 9 is a schematic enlarged view of a partial structure of the battery module in FIG. 7.
FIG. 10 is a structural schematic diagram of a battery pack according to some other embodiments.
FIG. 11 is a schematic structural diagram of a first component according to some embodiments.
FIG. 12 is a schematic structural diagram of a first component at another view angle according to some embodiments.
FIG. 13 is a schematic structural diagram of the battery module at another view angle according to some embodiments.
FIG. 14 is a schematic enlarged view of a partial structure of the battery module in FIG. 13.
FIG. 15 is a schematic structural diagram of the battery module in another state in FIG. 13.
FIG. 16 is a schematic enlarged view of a partial structure of the battery module in FIG. 15.
FIG. 17 is a schematic structural diagram of a battery module according to some other embodiments.
FIG. 18 is a schematic structural diagram of a battery pack according to some embodiments.
FIG. 19 is a schematic exploded view of the battery pack in FIG. 18.
FIG. 20 is a schematic flowchart of a method of manufacturing a battery module according to some embodiments.
FIG. 21 is a schematic structural diagram of an electric device according to some embodiments.

**Reference signs of main components:**

| | |
|---|---|
| Battery module | 100 |
| Cell assembly | 10 |
| Cell | 11 |
| First cell | 11a |
| Second cell | 11b |
| N-th cell | 11n |
| Cell shell | 111 |
| Main body portion | 11a |
| First sealing portion | 111b |
| Second sealing portion | 111c |
| Electrode terminal | 112 |
| First electrode terminal | 1121 |
| Second electrode terminal | 1122 |
| Welding portion | 112a |
| Bending portion | 112b |
| Extension portion | 112c |
| Welding mark | 110 |
| Connection region | 120 |
| Fastener | 101 |
| First component | 20 |
| Opening | 21 |
| Conductive sheet | 22 |
| First side edge | 23 |
| First notch | 231 |
| Second notch | 232 |
| Second side edge | 24 |
| First conductive member | 30 |
| First connection portion | 31 |
| Second connection portion | 32 |
| Third connection portion | 33 |
| Insulating member | 40 |
| Battery pack | 200 |
| Housing | 201 |
| Insulating bracket | 202 |
| Third conductive member | 203 |
| Electric device | 300 |
| First direction | X |
| Second direction | Y |
| Third direction | Z |

This application is further described with reference to the accompanying drawings in the following specific embodiments.

### DETAILED DESCRIPTION OF EMBODIMENTS

The following describes the technical solutions in some embodiments of this application with reference to the accompanying drawings in these embodiments of this application. Apparently, the described some embodiments are only some rather than all embodiments of this application.

It should be noted that when one component is assumed as being "connected to" another component, it may be connected to the another component directly or with a component possibly present therebetween. When a component is deemed as being "disposed" or "arranged" on another component, it may be directly disposed on the another component, or there may be a component disposed therebetween.

Unless otherwise defined, all technical and scientific terms used herein shall have the same meanings as commonly understood by persons skilled in the art to which this application belongs. The terms used herein in the specification of this application are intended to merely describe some specific embodiments rather than to limit this application. The term "and/or" used herein includes any and all combinations of one or more associated items listed.

It should be understood that, considering the factor of actual processing tolerances, the term "vertical" in the technical solution of this application is used to describe the ideal state between two components. In actual production or use, an approximation of this perpendicular state can exist between two parts. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, all technical and scientific terms used herein shall have the same meanings as commonly understood by persons skilled in the art to which this application belongs. The terms used herein in the specification of this application are intended to merely describe some specific embodiments rather than to limit this application.

Unless otherwise defined, the term "a plurality of " in the specification specifically indicates that there are two or more components when used for describing the number of components.

In a first direction X, a first direction X and a direction opposite to the first direction X are present. In a second direction Y, a second direction Y and a direction opposite to the second direction Y are present. In a third direction Z, a third direction Z and a direction opposite to the third direction Z are present.

Embodiments of this application provide a battery module, including a cell assembly, a first component, and a first conductive member. The cell assembly includes a plurality of cells, the cell includes a cell shell and an electrode terminal, and each electrode terminal includes a welding portion. The plurality of cells include a first cell and a second cell. The first component and the cell shell are arranged along a first direction. The first conductive member is disposed on a side of the first component, the side of the first component being a side oriented away from the cell shell. The first conductive member includes a first connection portion and a second connection portion. The first connection portion is welded to the electrode terminal of the first cell. The second connection portion is configured to be connected to an external device. Along the first direction, a projection of the welding portion of at least one second cell overlaps a projection of the first conductive member, so that the second connection portion does not extend beyond the first component, reducing the occupied space, which helps to improve the space utilization, thereby increasing the energy density of the battery module.

The following describes in detail some embodiments of this application with reference to the accompanying drawings. In absence of conflicts, the following implementations and features in some implementations may be combined.

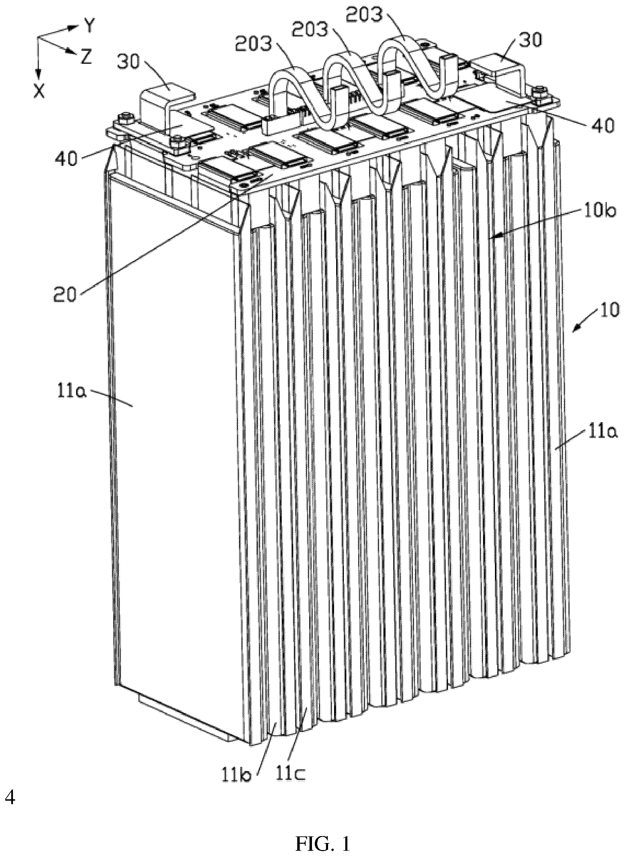

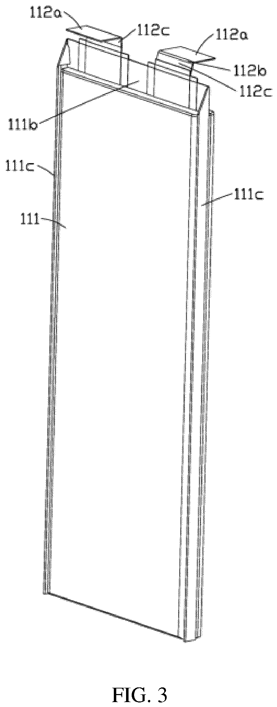

Refer to FIGs. 1 to 3, an embodiment of this application provides a battery module 100, including a cell assembly 10, the cell assembly 10 includes a plurality of cells 11, each cell 11 includes a cell shell 111 and an electrode terminal 112, and each electrode terminal 112 includes a welding portion 112a.

In some embodiments, the cell assembly 10 includes a plurality of cells 11, the plurality of cells include a first cell 11a and a second cell 11b.

In some embodiments, each cell 11 includes an electrode assembly (not shown in the figure), the electrode assembly is disposed in the cell shell 111, and the electrode terminal 112 is connected to the electrode assembly and extends from the cell shell 111.

In some embodiments, the cell 11 includes a pouch cell.

In some embodiments, the cell shell 111 includes a main body portion 111a and a first sealing portion 111b. The electrode assembly is disposed in the main body portion 111a, the first sealing portion 111b is connected to the main body portion 111a, and the electrode terminal 112 extends out of the first sealing portion 111b.

In some embodiments, the cell shell 111 further includes two second sealing portions 111c, and along the third direction Z, the two second sealing portions 111c are disposed on two opposite sides of the main body portion 111a.

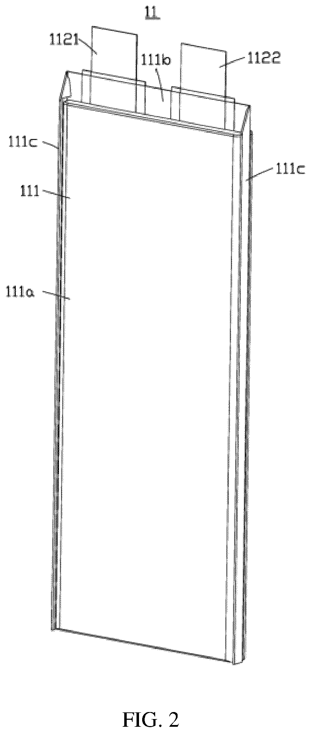

In some embodiments, referring to FIG. 2, the electrode terminal 112 includes a first electrode terminal 1121 and a second electrode terminal 1122, and the first electrode terminal 1121 and the second electrode terminal 1122 are located ona same side of the main body portion 111a.

In some embodiments, the electrode terminal 112 includes a first electrode terminal 1121 and a second electrode terminal 1122, and along the first direction X, the first electrode terminal 1121 and the second electrode terminal 1122 are located on two opposite sides of the main body portion 111a.

In some embodiments, the first electrode terminal 1121 is a positive terminal, and the second electrode terminal 1122 is a negative terminal; or the first electrode terminal 1121 is a negative terminal, and the second electrode terminal 1122 is a positive terminal.

In some embodiments, taking the cell assembly 10 including n cells 11 as an example, where n is a natural number greater than or equal to 2, along the stacking direction of the n cells 11, the n cells 11 include a first cell 11a and the first cell 11a is the outermost cell of the cell assembly 10. In some embodiments, when n is greater than 2, the n cells 11 include first cells 11a and second cells 11b, the first cells 11a being the outermost cells of the cell assembly 10, and the second cells 11b being cells other than the first cells 11a. In other embodiments, the first cell 11a is the cell located in the middle.

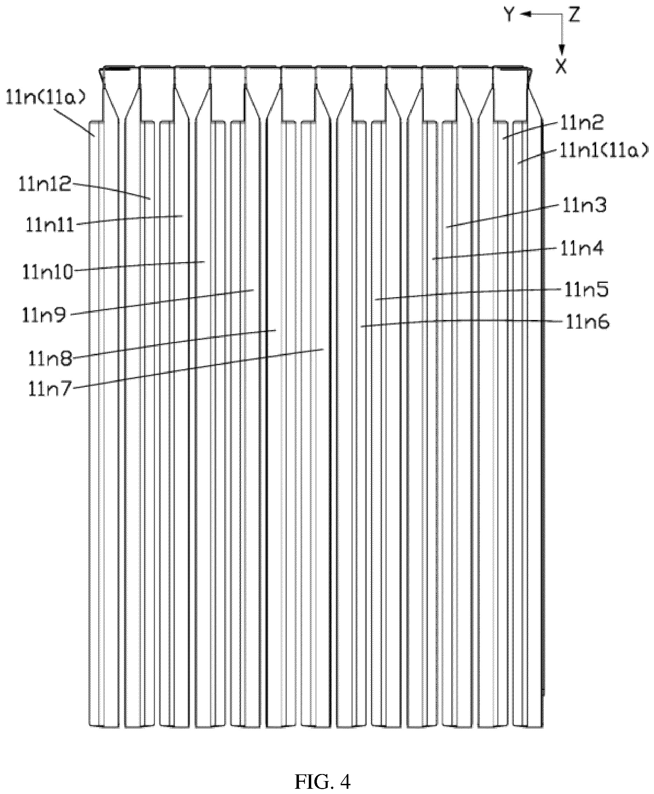

Referring to FIG. 4, in some embodiments, n is a natural number greater than or equal to 4, and the cell assembly 10 includes sequentially arranged cell 11n1, cell 11n2, cell 11n3 to the n-th cell 11n. The cell assembly 10 includes two first conductive members 30 and two first cells 11a, where the first cell 11a is the cell 11n1, and the other first cell 11a is the n-th cell 11nn. The cell assembly 10 includes second cells 11b, where the cell 11n2, the cell 11n3 to the n-1th cell are the second cells 11b.

In some embodiments, the cell assembly 10 includes sequentially arranged cell 11n1, cell 11n2, cell 11n3, cell 11n4, cell 11n5, cell 11n6, cell 11n7, cell 11n8, cell 11n9, cell 11n10, cell 11n11, cell 11n12, and cell 11nn. The cell 11n1 and cell 11nn are the first cells 11a, and the cell 11n2, cell 11n3, cell 11n4, cell 11n5, cell 11n6, cell 11n7, cell 11n8, cell 11n9, cell 11n10, cell 11n11, cell 11n12 are the second cells.

In some embodiments, the battery module 100 includes a first component 20, and the first component 20 and the cell shell 111 are arranged along the first direction X.

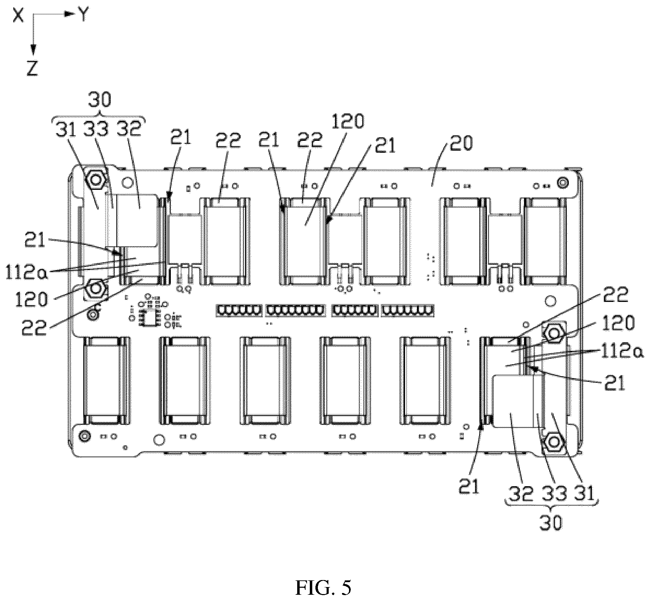

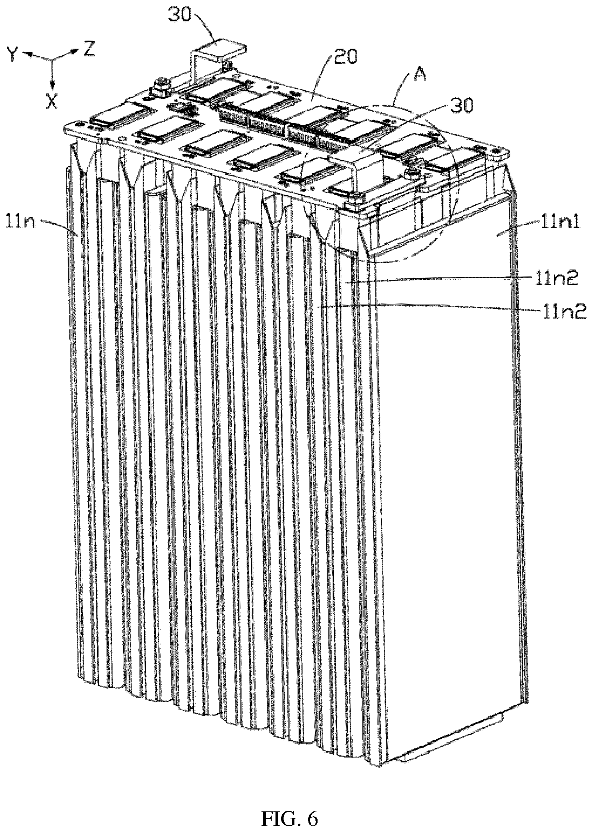

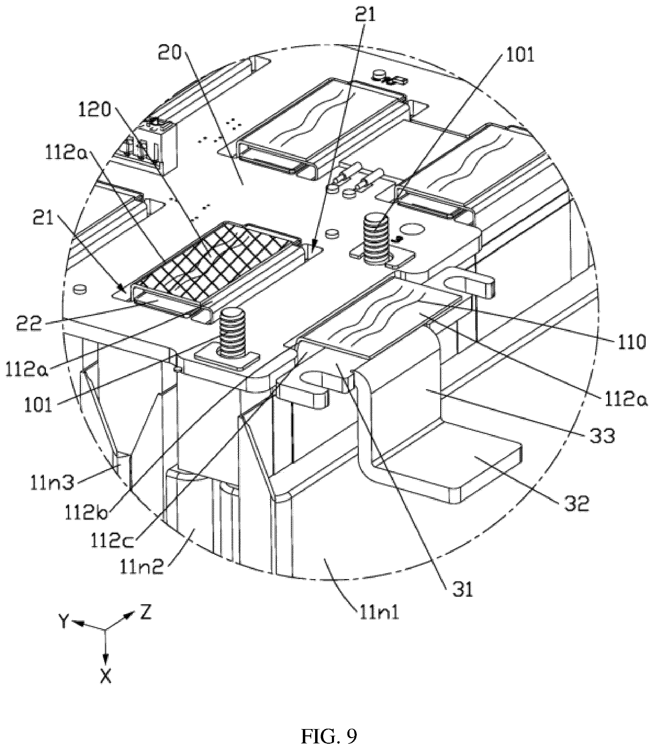

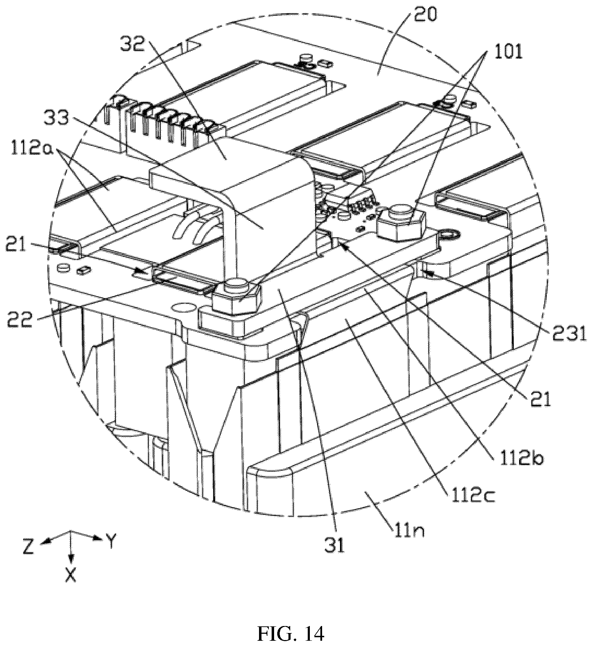

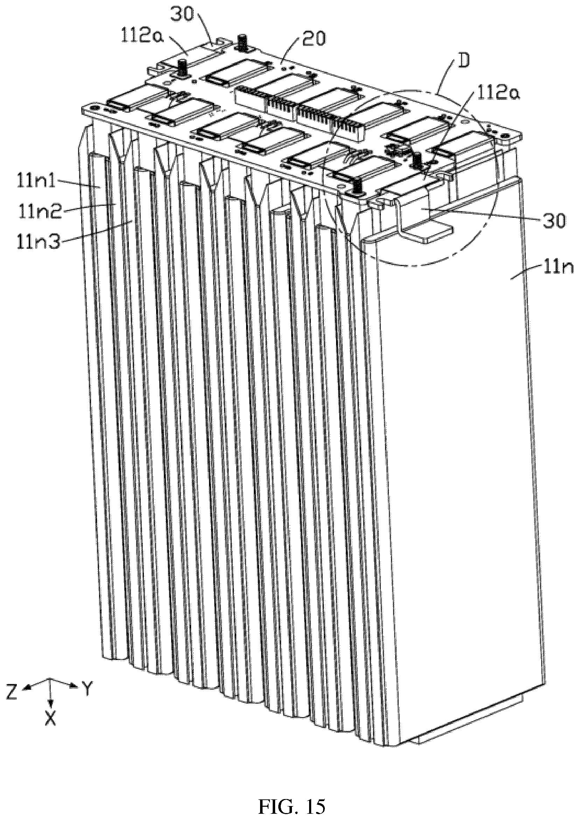

Referring to FIGs. 5 to 17, in some embodiments, the battery module 100 includes a first conductive member 30, and the first conductive member 30 is disposed on a side of the first component 20, the side of the first component 20 being a side oriented away from the cell shell 111. The first conductive member 30 includes a first connection portion 31, and the first connection portion 31 is welded to the electrode terminal 112 of the first cell 11a.

In some embodiments, the first connection portion 31 is welded to the welding portion 112a of the first cell 11a.

In some embodiments, the first conductive member 30 includes a second connection portion 32, the second connection portion 32 is configured to be connected to an external device.

In some embodiments of this application, the first connection portion 31 is welded to the electrode terminal 112 of the first cell 11a to form a welding mark 110, and the welding mark 110 is located on a side of the welding portion 112a of the first cell 11a towards the first component 20. The welding mark 110 refers to the welding trace formed on the surface of the welding portion 112a facing the welding device during the welding process.

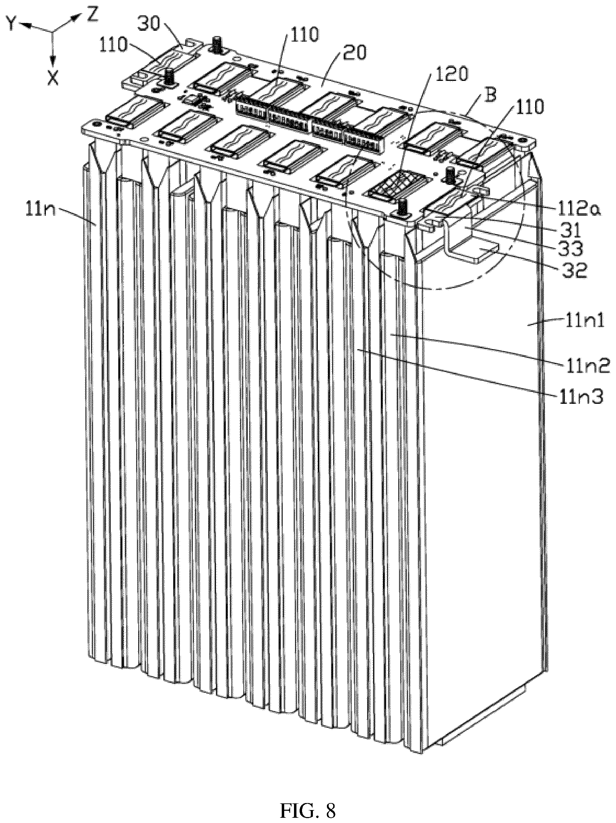

In some embodiments, referring to FIG. 8, the welding device may face the welding portion 112a along the first direction X, and perform welding to form the welding mark 110.

In some embodiments, the first connection portion 31 and the electrode terminal 112 are welded by laser.

In some embodiments, the first connection portion 31 and the electrode terminal 112 are welded by ultrasonic.

In some embodiments, the battery module 100 includes a fastener 101, and the first connection portion 31 is fixedly connected to a side of the first component 20 via the fastener 101, the side of the first component 20 being a side oriented away from the cell shell 111. Optionally, the fastener 101 includes a screw.

In some embodiments, the battery module 100 includes an adhesive portion (not shown in the figure), the first connection portion 31 is adhesively connected to a side of the first component 20 via the adhesive portion, the side of the first component 20 being a side oriented away from the cell shell 111.

In some embodiments, along the first direction X, a projection of the welding portion 112a of at least one second cell 11b overlaps a projection of the second connection portion 32, reducing the space occupied by the second connection portion 32 in the second direction Y, which helps to improve the space utilization, thereby increasing the energy density of the battery module 100. The welding portion 112a of the second cell 11b refers to the welding portion 112a of a cell 11 other than the first cell 11a.

In some embodiments, along the first direction X, a projection of the second connection portion 32 overlaps a projection of the welding portion 112a of the cell 11n2.

In some embodiments, along the first direction X, a projection of the second connection portion 32 overlaps a projection of the welding portion 112a of the cell 11n2, and a projection of the second connection portion 32 overlaps a projection of the welding portion 112a of the cell 11n3.

In some embodiments, along the first direction X, a projection of the second connection portion 32 overlaps a projection of the welding portion 112a of the cell 11n-1.

In some embodiments, along the first direction X, a projection of the second connection portion 32 overlaps a projection of the welding portion 112a of the cell 11n-1, and a projection of the second connection portion 32 overlaps a projection of the welding portion 112a of the cell 11n-2.

Referring to FIGs. 5, 11, and 12, in some embodiments, the first component 20 is provided with a plurality of openings 21, and the electrode terminals 112 of adjacent cells 11 pass through the openings 21 and are connected to the side of the first component 20 away from the cell shell 111.

In some embodiments, the electrode terminals 112 of adjacent cells 11 pass through the openings 21. Along the first direction X, the two welding portions 112a are stacked to form a connection region 120.

In some embodiments, the connection methods include but are not limited to laser welding and ultrasonic welding. In other embodiments, the connection methods include using a conductive adhesive or the like.

In some embodiments, along the first direction X, a projection of the second connection portion 32 overlaps a projection of the connection region 120 closest to the first cell 11a.

In some embodiments, the electrode terminal 112 of the cell 11n2 passes through one of the openings 21, the electrode terminal 112 of the cell 11n3 passes through another one of the openings 21, the welding portion 112a of the cell 11n2 and the welding portion 112a of the cell 11n3 are stacked and welded to form a connection region 120, and the connection region 120 is closest to the first cell 11a.

In some embodiments, the electrode terminal 112 of the cell 11n-1 passes through one of the openings 21, the electrode terminal 112 of the cell 11n-2 passes through anotherone of the openings 21, the welding portion 112a of the cell 11n-1 and the welding portion 112a of the cell 11n-2 are stacked and welded to form a connection region 120, and the connection region 120 is closest to the first cell 11a.

In some embodiments, the first component 20 is provided with a plurality of conductive sheets 22, the electrode terminals 112 of adjacent cells 11 pass through the openings 21, and the two welding portions 112a are connected to the conductive sheets 22. Optionally, the two welding portions 112a are welded to the conductive sheets 22. Welding includes, but is not limited to, laser welding or ultrasonic welding. In other embodiments, the electrode terminal 112 and the conductive sheet 22 can also be connected by other means, for example, using the conductive adhesive. Optionally, of the two welding portions 112a, one welding portion 112a is connected to the conductive sheet 22 to form a connection region 120, and the other welding portion 112a is connected to the conductive sheet 22 to form a connection region 120. Along the first direction X, the two welding portions 112a are spaced apart from each other. Optionally, along the first direction X, the two welding portions 112a and the conductive sheets 22 are stacked to form a connection region 120.

In some embodiments, the first component 20 is provided with a plurality of conductive sheets 22, and the welding portion 112a of the second cell 11b passes through the opening 21 and is connected to the conductive sheet 22 to form a connection region 120.

In some embodiments, the conductive sheet 22 is configured to collect electrical signal information of the cell 11.

In some embodiments, the first component 20 includes a first circuit board. Optionally, the first circuit board includes a flexible printed circuit (FPC, flexible printed circuit). Optionally, the first circuit board includes a printed circuit board (PCB, printed circuit board).

In some embodiments, the first component 20 includes an insulating bracket.

In some embodiments, the battery module 100 further includes electronic components disposed on the first component 20, and the electronic components can collect information of the cell assembly 10, or control the cell assembly 10.

Referring to FIGs. 5 to 9, in some embodiments, the first conductive member 30 includes a third connection portion 33, the first connection portion 31 is connected to the third connection portion 33, and the third connection portion 33 is connected to the second connection portion 32. Along the first direction X, the second connection portion 32 and the first component 20 are spaced apart from each othe via the third connection portion 33, which helps to reduce the short circuit risk caused by contact between the second connection portion 32 and another welding portion 112a.

In some embodiments, the first connection portion 31, the second connection portion 32, and the third connection portion 33 are integrally formed.

In some embodiments, the first conductive member 30 can transmit the power of the battery module 100. When the battery module 100 discharges, the electric energy of the battery module 100 can be transmitted to the load of the electric device via the first conductive member 30 to supply power to the load of the electric device. When the battery module 100 charges, the external electric energy can be transmitted to the battery module 100 via the first conductive member 30 to charge the battery module 100.

In some embodiments, the first conductive member 30 can transmit electrical signals of the battery module 100, such as a voltage signal, a current signal, and a temperature signal. The electrical signal of the battery module 100 can be transmitted to another control unit (for example, a microcontroller) via the first conductive member 30, and the charging and/or discharging of the battery module 100 can be controlled based on the electrical signal of the battery module 100.

In some embodiments of this application, the first conductive member 30 is configured to transmit power and/or electrical signal of the cell assembly 10.

In some embodiments, the electrical signal information includes but is not limited to voltage, current, temperature, and resistance.

In some embodiments, the first conductive member 30 includes a copper bar.

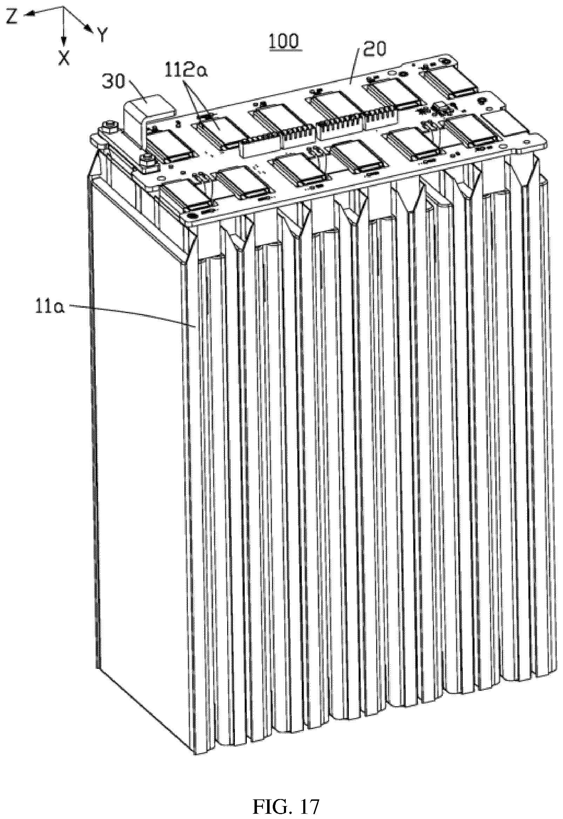

Referring to FIG. 17, in another embodiment, the battery module 100 includes a first conductive member 30 and a first cell 11a.

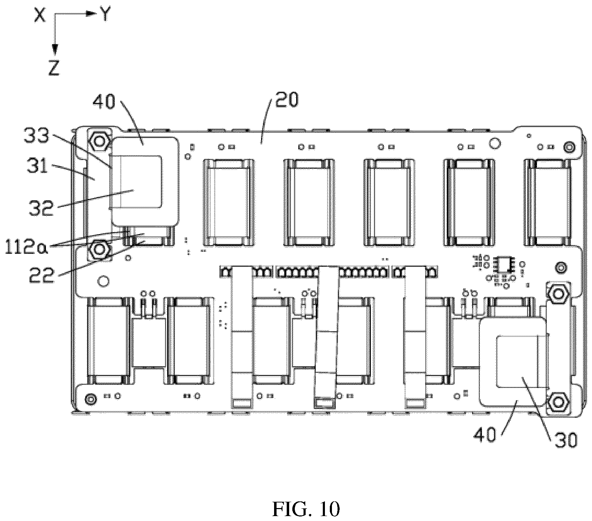

Referring to FIG. 10, in some embodiments, the battery module 100 further includes an insulating member 40, the insulating member 40 is disposed on a side of the first component 20, the side of the first component 20 being a side oriented away from the cell shell 111, and along the first direction X, the insulating member 40 is located between the first component 20 and the second connection portion 32. The insulating member 40 covers at least a part of one of the welding portions 112a.

In some embodiments, along the first direction X, the projection of the second connection portion 32 is located within the projection of the insulating member 40, which can further reduce the short circuit risk caused by the connection between the second connection portion 32 and the welding portions 112a of another cell.

In some embodiments, the insulating member 40 covers at least a part of the welding portion 112a of the cell 11n2.

In some embodiments, the insulating member 40 covers at least a part of the welding portion 112a of the cell 11n2, and the insulating member 40 covers at least a part of the welding portion 112a of the cell 11n3.

In some embodiments, the insulating member 40 covers the connection region 120.

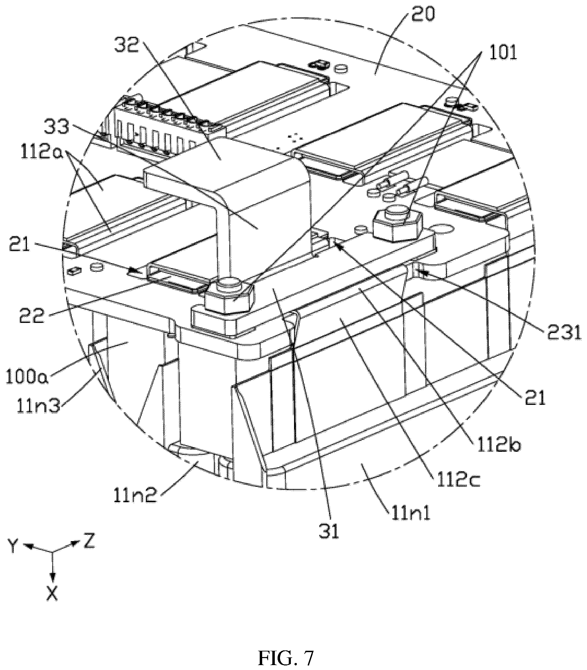

Referring to FIGs. 7 to 14, in some embodiments, the electrode terminal 112 of the first cell 11a connected to the first connection portion 31 includes a bending portion 112b, and the bending portion 112b is connected to the welding portion 112a. Along the first direction X, the projection of the bending portion 112b does not overlap with the projection of the first conductive member 30.

In some embodiments, in the second direction Y, the bending portion 112b is configured to bend away from the first component 20, which facilitates the deformation of the electrode terminal 112 of the first cell 11a when a plurality of cells 11 expand in the second direction Y.

In some embodiments, the electrode terminal 112 welded to the first connection portion 31 includes an extension portion 112c.

In some embodiments, the electrode terminal 112 of the first cell 11a includes an extension portion 112c located outside the cell shell 111, and the extension portion 112c is arranged away from the second cell 11b. The extension portion 112c is connected to the first sealing portion 111b, and the extension portion 112c is inclined with respect to the first sealing portion 111b of the first cell 11a. The distance between the electrode terminal 112 of the cell 11n1 and the electrode terminal 112 of the cell 11n2 can be increased along the second direction Y, reducing the short circuit risk caused by contact between the electrode terminal 112 of the cell 11n1 and the electrode terminal 112 of the cell 11n2.

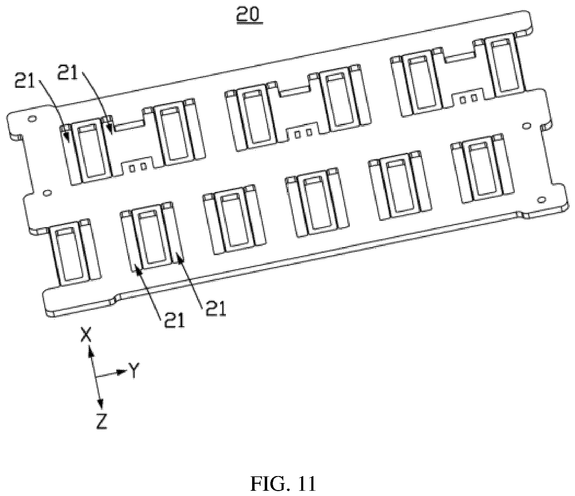

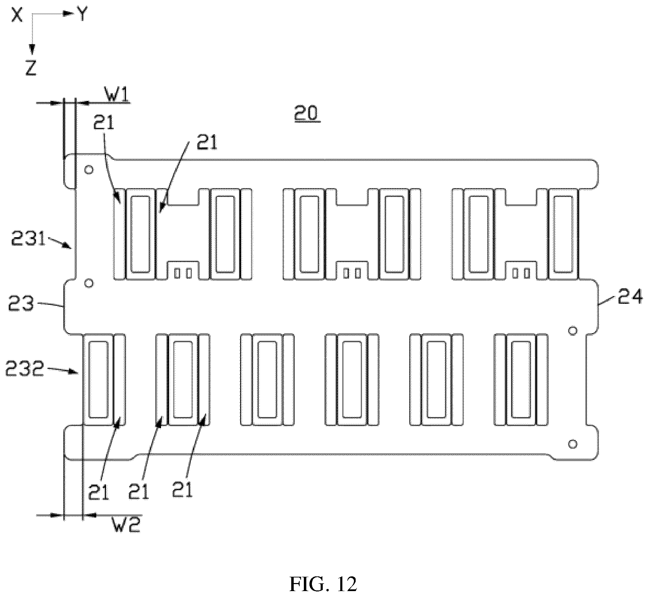

Referring to FIGs. 11 and 12, in some embodiments, along the second direction Y, the first component 20 includes a first side edge 23 and a second side edge 24, the first side edge 23 is provided with a first notch 231 and a second notch 232, and the first notch 231 and the second notch 232 are arranged along the third direction Z. Along the second direction Y, a width W1 of the first notch 231 is smaller thana width W2 of the second notch 232, increasing the distance between the first notch 231 and the adjacent opening 21. This facilitates the arrangement of the first conductive member 30, can increase the distance between the welding portion 112a of the first cell 11a and the welding portion 112a of the second cell 11n2, and helps to reduce the short circuit risk.

In some embodiments, the first side edge 23 and the second side edge 24 have the same structure, and both the first side edge 23 and the second side edge 24 are provided with the first notch 231 and the second notch 232.

In some embodiments, the extension portion 112c of the first electrode terminal 1121 of the first cell 11a is disposed in the first notch 231.

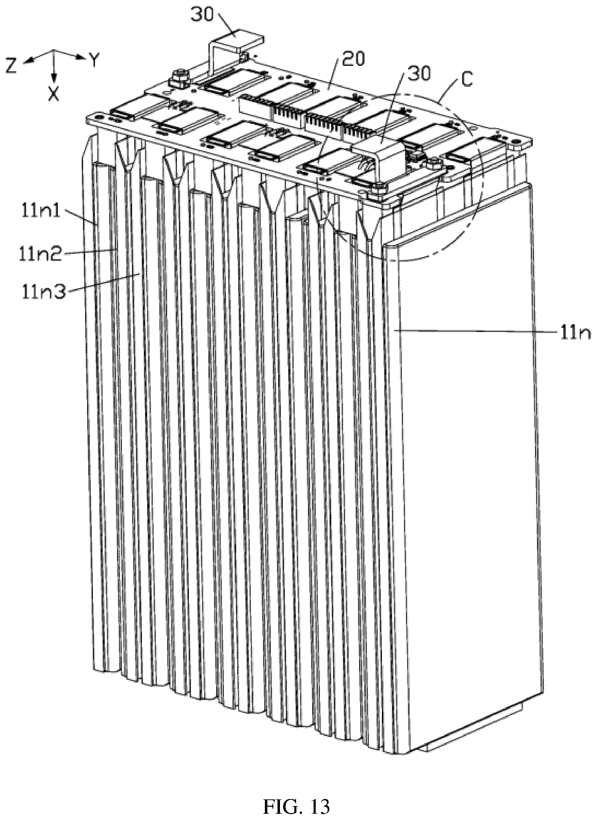

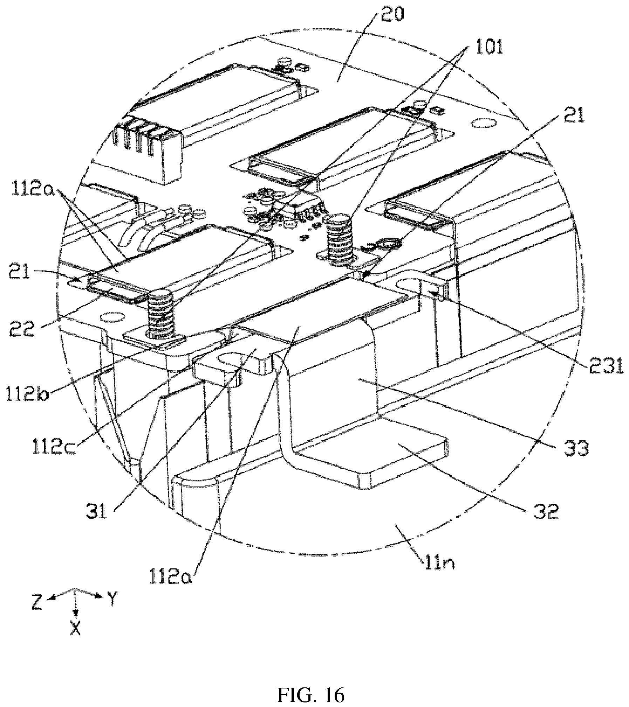

Referring to FIGs. 13 and 16, in some embodiments, the battery module 100 includes two first conductive members 30 and two first cells 11a, where the first cell 11a is the cell 11n1, and the other first cell 11a is the n-th cell 11n. One of the first conductive members 30 is connected to the electrode terminal 112 of the cell 11n1, the first connection portion 31 of the other first conductive member 30 is connected to the electrode terminal 112 of the n-th cell 11nn, and the second connection portion 32 of the first conductive member 30 is configured to be connected to an external device.

In some embodiments, along the first direction X, the projection of the second connection portion 32 of the other first conductive member 30 overlaps with the projection of at least one of the other welding portions 112a, further reducing the occupied space. This further helps to improve the space utilization, thereby further increasing the energy density of the battery module 100. The other welding portions 112a refer to the welding portions 112a of other cells 11 except for the first cell 11a.

In some embodiments, one of the two first conductive members 30 serves as the positive terminal of the cell assembly 10, and the other serves as the negative terminal of the cell assembly 10.

In some embodiments, referring to FIG. 10, FIG. 10 is a view observed along the first direction X. Observed along the first direction X, the two first conductive members 30 are staggered along the second direction Y and staggered along the third direction Z.

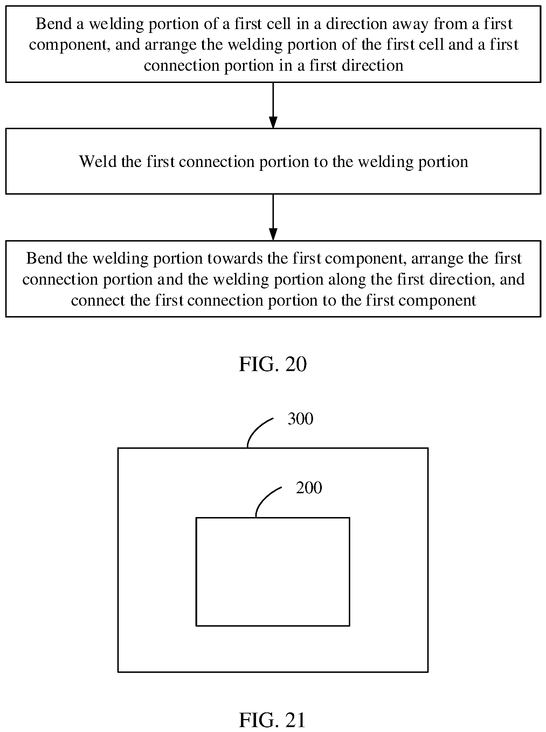

Referring to FIG. 20, this application also provides a method of manufacturing the battery module 100 in any one of some above embodiments, the method including the following steps:
Step 1: As shown in FIG. 8, bend the welding portion 112a of the first cell 11a in a direction away from the first component 20, and arrange the welding portion 112a of the first cell and the first connection portion 31 along the first direction X.
Step 2: Weld the first connection portion 31 to the welding portion 112a.
Step 3: After step 2, bend the welding portion 112a towards the first component 20, arrange the first connection portion 31 and the welding portion 112a along the first direction X, and connect the first connection portion 31 to the first component 20.

In some embodiments, before step 2, the manufacturing method further includes: enabling the electrode terminals 112 of adjacent cells 11 to pass through the first components 20, and stacking and welding them together.

In some embodiments, the first connection portion 31 and the welding portion 112a, as well as other layers of stacked welding portions 112a, are welded together by laser in one step, which can simplify the laser welding process and improve the production efficiency.

Referring to FIG. 7, in some embodiments, step 3 specifically includes: bending, via the bending portion 112b, the welding portion 112a of the first cell 11a and the first connection portion 31 together towards the first component 20, making the welding mark 110 face the first component 20, and then fixing the first connection portion 31 to the side surface of the first component 20, the side surface of the first component 20 being a side surfac oriented away from the cell shell 111.

In some embodiments, the battery module 100 includes two first conductive members 30 and two first cells 11a, and before step 2, the manufacturing method further includes: bending the welding portion 112a of the n-th cell 11nn away from the first component 20, so that the welding portion 112a of the n-th cell 11nn and the first connection portion 31 of the other first conductive member 30 are arranged along the first direction X.

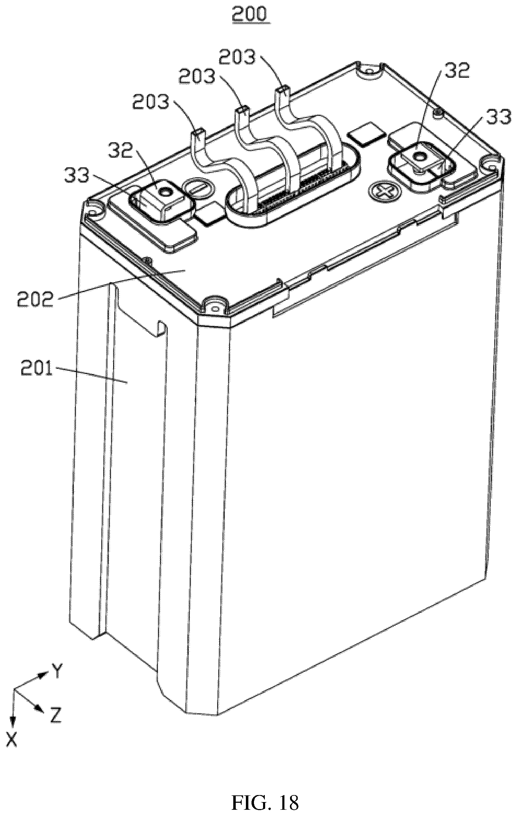

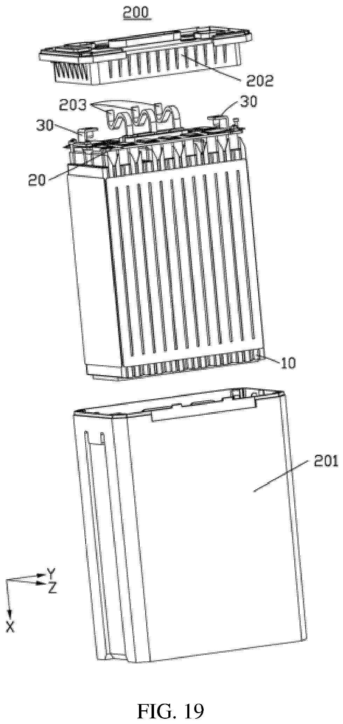

Referring to FIGs. 18 and 19, this application also provides a battery pack 200 using the battery module 100 in any one of some above embodiments, where the battery pack 200 includes a housing 201, and the battery module 100 is disposed in the housing 201.

In some embodiments, the battery pack 200 includes a second circuit board (not shown in the figure), and the second circuit board is disposed on a side of the first component 20, the side of the first component 20 being a side oriented away from the cell shell 111.

In some embodiments, the external device includes a second circuit board, and the second connection portion 32 is connected to the second circuit board. The second circuit board is configured to receive electrical signals from the first conductive member 30.

Optionally, the second circuit board includes a BMS component (battery management system), the BMS component includes a plurality of electronic components, and the plurality of electronic components can realize functions such as control, protection, communication, power calculation, signal transmission, and power transmission of the cells 11.

Optionally, the second circuit board includes a flexible printed circuit (FPC, flexible printed circuit). Optionally, the second circuit board includes a printed circuit board (PCB, printed circuit board), and a plurality of first wires (not shown in the figure) are provided on the second circuit board.

In some embodiments, the battery pack 200 includes an insulating bracket 202, and at least a part of the insulating bracket 202 is disposed in the housing 201. The insulating bracket 202 is configured to provide insulation protection for the electrode terminal 112, the first component 20, and the first conductive member 30. A part of the third connection portion 33 passes through the insulating bracket 202, and the second connection portion 32 is disposed on a side of the insulating bracket 202 and connected to the second circuit board, the side of the insulating bracket 202 being a side oriented away from the first component 20.

In some embodiments, the battery pack 200 includes a third conductive member 203, the third conductive member 203 is connected to the first component 20, and the third conductive member 203 passes through the insulating bracket 202 and is connected to the second circuit board. The third conductive member 203 is configured to transmit the electrical signal of the cell assembly 10 to the second circuit board.

Referring to FIG. 21, this application further provides an electric device 300 using the battery pack 200. In an embodiment, the electric device 300 in this application may be but is not limited to an electronic device, a drone, a backup power source, an electric vehicle, an electric motorcycle, an electric motor bicycle, an electric tool, and a large household battery module.

Those of ordinary skill in the art should appreciate that some foregoing embodiments are for description of this application only but not for limiting this application. Appropriate modifications and variations made to some foregoing embodiments without scope of this application all fall within the scope of this application.

## Claims

1. A battery module (100), comprising:
a cell assembly (10) comprising a plurality of cells (1), each cell (11) comprises a cell shell (111) and an electrode terminal (112), each electrode terminal (112) comprises a welding portion (112a), and the plurality of cells (11) comprise a first cell (11a) and a second cell (11b);
a first component (20), the first component (20) and the cell shell (111) are arranged along a first direction (X); and
a first conductive member (30) disposed on a side of the first component (20), the side of the first component (20) being a side oriented away from the cell shell (111); the first conductive member (30) comprises a first connection portion (31) and a second connection portion (32), the first connection portion (31) is welded to the electrode terminal (112) of the first cell (11a), and the second connection portion (32) is configured to be connected to an external device; wherein
along the first direction (X), a projection of the welding portion (112a) of the second cell (11b) overlaps a projection of the first conductive member (30).

2. The battery module (100) according to claim 1, wherein the plurality of cells (11) are stacked along a second direction (Y), and the first cell (11a) is an outermost cell of the cell assembly (10) in the second direction (Y).

3. The battery module (100) according to claim 2, wherein along the second direction (Y), the first component (20) comprises a first side edge (23) and a second side edge (24), the first side edge (23) is provided with a first notch (231) and a second notch (232), and the first notch (231) and the second notch (232) are arranged along a third direction (Z), the electrode terminal (112) connected to the first connection portion (31) is disposed in the first notch (231);
along the second direction (Y), a width (W1) of the first notch (231) is smaller than a width (W2) of the second notch (232).

4. The battery module (100) according to any one of claims 1 to 3, wherein the first connection portion (31) is welded to the electrode terminal (112) of the first cell (11a) to form a welding mark (110), and the welding mark (110) is located on a side of the welding portion (112a) of the first cell (11a) towards the first component (20).

5. The battery module (100) according to any one of claims 1 to 4, wherein the first conductive member (30) comprises a third connection portion (33), and the third connection portion (33) connects the first connection portion (31) and the second connection portion (32); and
along the first direction (X), the second connection portion (32) and the first component (20) are spaced apart from each other.

6. The battery module (100) according to any one of claims 1 to 5, wherein the cell shell (111) comprises a main body portion (111a) and a first sealing portion (111b), and the electrode terminal (112) extends out of the first sealing portion (111b) from the main body portion(111a);
each cell comprises an electrode assembly, and the electrode assembly is disposed at the main body portion(111a); and
the electrode terminal (112) welded to the first connection portion (31) comprises an extension portion (112c) located outside the cell shell (111) of the first cell, the extension portion (112c) is facing away from the second cell (11b), and the extension portion (112c) is inclined with respect to the first sealing portion (111b) of the first cell (11a).

7. The battery module (100) according to any one of claims 1 to 6, wherein the first conductive member (30) comprises a copper bar.

8. The battery module (100) according to any one of claims 1 to 7, wherein the first component (20) comprises a plurality of openings (21);
the welding portions (112a) of two adjacent cells pass through one of the openings (21), and the welding portions (112a) of the two adjacent cells (11) are welded on a side of the first component (20) to form a connection region (120), the side of the first component (20) being a side oriented away from the cell shell (111); and
along the first direction (X), a projection of the second connection portion (32) overlaps a projection of the connection region (120) closest to the first cell (11a).

9. The battery module (100) according to any one of claims 1 to 7, wherein the first component (20) comprises a plurality of openings (21);
the first component (20) is provided with a plurality of conductive sheets (22), the welding portion (112a) of the second cell (11b) passes through one opening (21), and the welding portion (112a) of the second cell (11b) is welded to the conductive sheet (22) to form a connection region (120); and
along the first direction (X), a projection of the second connection portion (32) overlaps a projection of the connection region (120).

10. The battery module (100) according to claim 8 or 9, wherein the battery module (100) further comprises an insulating member (40), the insulating member (40) is disposed between the first component (20) and the second connection portion (32), and the insulating member (40) covers at least a part of the connection region (120); and
along the first direction (X), the projection of the second connection portion (32) is located within a projection of the insulating member (40).

11. The battery module (100) according to any one of claims 1 to 10, wherein the first component (20) comprises a first circuit board.

12. The battery module (100) according to any one of claims 1 to 11, wherein the electrode terminal (112) connected to the first connection portion (31) comprises a bending portion (112b), the bending portion (112b) is connected to the welding portion (112a);
along the first direction (X), a projection of the bending portion (112b) and a projection of the first conductive member (30) are spaced apart from each other.

13. The battery module (100) according to claim 12, wherein in the second direction (Y), the bending portion (112b) bend away from the first component (20).

14. A battery pack (200), comprising the battery module (100) according to any one of claims 1 to 13 and a housing; wherein the battery module (100) is disposed in the housing.

15. An electric device, comprising the battery pack (200) according to claim 14.
